# EUROPÄISCHE PATENTSCHRIFT

(11) **EP 1 414 669 B1**
(45) Veröffentlichungstag und Bekanntmachung des Hinweises auf die Patenterteilung: **15.11.2006**
(21) Anmeldenummer: 02794503.9
(22) Anmeldetag: 12.07.2002
(51) Int. Cl.: B60N 2/08

(54) **VERRIEGELUNGSVORRICHTUNG FÜR EINEN FAHRZEUGSITZ**
LOCKING DEVICE FOR THE SEAT OF A MOTOR VEHICLE
DISPOSITIF DE VERROUILLAGE POUR UN SIEGE DE VEHICULE

(30) Priorität: 11.08.2001 DE 10139630
(43) Veröffentlichungstag der Anmeldung: 06.05.2004
(73) Patentinhaber: KEIPER GmbH & Co. KG, 67657 Kaiserslautern (DE)
(72) Erfinder: KLAHOLD, Wolfgang, 44652 Herne (DE); FLICK, Joachim, 42499 Hückeswagen (DE); BORBE, Michael, 53359 Rheinbach (DE)
(74) Vertreter: Patentanwälte Hosenthien-Held und Dr. Held
(86) Internationale Anmeldenummer: PCT/EP2002/007769
(87) Internationale Veröffentlichungsnummer: WO 2003/013901

(56) Entgegenhaltungen:
- EP-A- 0 845 384
- EP-A- 0 936 102
- WO-A-95/02520
- DE-A- 19 811 094
- DE-A- 19 918 622
- FR-A- 2 759 330

## Beschreibung

Die Erfindung betrifft eine Verriegelungsvorrichtung für einen Fahrzeugsitz, insbesondere in einem Einsteller eines Kraftfahrzeugsitzes, mit den Merkmalen des Oberbegriffs des Anspruches 1.

Eine Verriegelungsvorrichtung dieser Art ist aus der FR 2 759 330 A1 bekannt. Bei einer aus der DE 198 11 094 A1 bekannten Verriegelungsvorrichtung wirkt ein manuell betätigbarer Bügel auf einen Hebel ein, welcher in einem oberschienenfesten Stützlager gelagert ist und welcher federbelastete Riegel aus Öffnungen in der Unterschiene aushebt. Die Form des Stützlagers und der Lagerschneide des Hebels sind so gewählt, dass sie als Steuerelemente wirken und den Betätigungsvorgang beeinflussen, insbesondere die Größe der aufzubringenden Entriegelungskraft steuern.

Der Erfindung liegt die Aufgabe zu Grunde, eine Verriegelungsvorrichtung der eingangs genannten Art zu verbessern, insbesondere die Betätigung derselben bei möglichst gleichem Herstellungsaufwand zu erleichtern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Durch die Anordnung der Steuerelemente der ersten Baugruppe und der zweiten Baugruppe zwischen denselben ist die Entriegelungskraft-Steuerfunktion von der Lagerfunktion getrennt. Die Steuerelemente können in Hinblick auf die Anwendungsfälle vielseitiger gestaltet werden, insbesondere um die insgesamt aufzubringende Betätigungskraft zu verringern und deren zeitlichen Verlauf zu beeinflussen, ohne dass auf die Lagerfunktion Rücksicht genommen werden muss. Wegen der in sich starren Baugruppen sind für das Zusammenwirken der Baugruppen und Steuerelemente keine zusätzlichen Bauteile notwendig, welche den Herstellungsaufwand und das Gesamtspiel erhöhen würden.

Die erste Baugruppe weist als Steuerelement eine Gleitkurve auf, welche sich in der Bewegungsrichtung der ersten Baugruppe unterschiedlich tief erstreckt, beispielsweise durch flachere und steilere Abschnitte. Die aufzubringende Entriegelungskraft hängt dann von der Gestaltung der Gleitkurve und dem Abstand zwischen dem Anlagepunkt der zweiten Baugruppe an dieser Gleitkurve und dem Lager der zweiten Baugruppe ab.

Die vorzugsweise schwenkbare zweite Baugruppe ist vorzugsweise innerhalb eines durch die zweite Sitzschiene definierten Bauraums gelagert und vorzugsweise gegenüber der zweiten Sitzschiene vorgespannt. Gegenüber der bekannten Lagerung außerhalb der zweiten Sitzschiene wird weniger Bauraum außerhalb derselben beansprucht. Das Steuerelement zum Zusammenwirken mit der ersten Baugruppe ist dann vorzugsweise ebenfalls innerhalb dieses Bauraums in Abstand zum Lager angeordnet, während der mit dem Entriegelungselement zusammenwirkende Teil der zweiten Baugruppe außerhalb des Bauraums angeordnet ist. Die zweite Baugruppe kann vollständig aus Kunststoff bestehen, so dass sie auch bei komplexerer Ausbildung einfach herzustellen ist. Dabei kann die zweite Baugruppe einstückig ausgebildet sein oder aus mehreren Einzelteilen bestehen, welche miteinander verbunden sind.

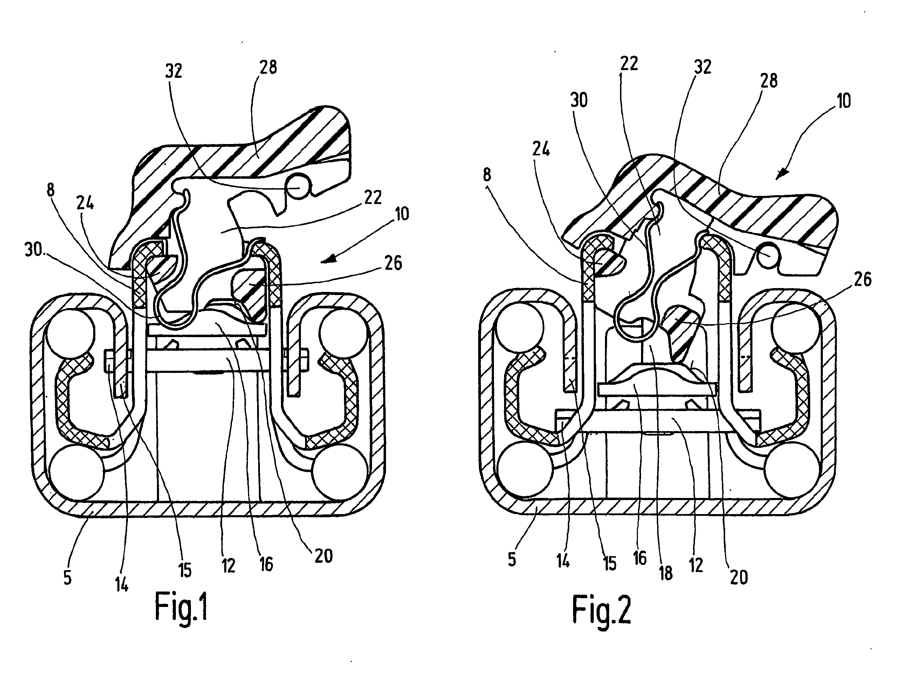

Im folgenden ist die Erfindung anhand eines in der Zeichnung dargestellten Ausführungsbeispiels näher erläutert. Es zeigen
- Fig. 1: einen Schnitt durch das Ausführungsbeispiel im verriegelten Zustand,
- Fig. 2: einen Schnitt durch das Ausführungsbeispiel im entriegelten Zustand,

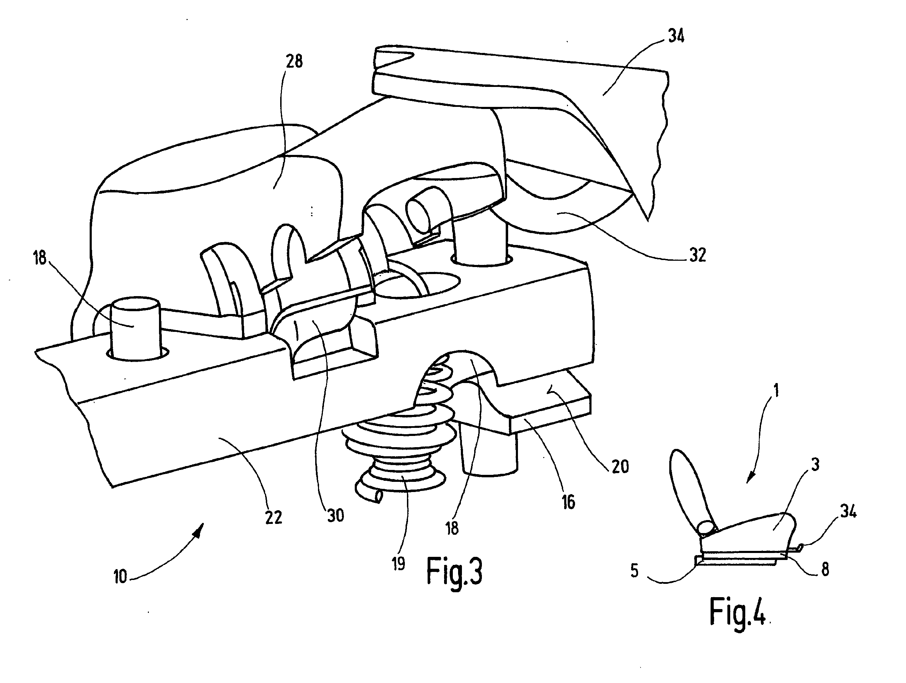

- Fig. 3: eine perspektivische Teilansicht der zweiten Baugruppe sowie einiger Bauteile, die in Kontakt mit dieser stehen, und
- Fig. 4: eine schematische Darstellung eines Fahrzeugsitzes.

Ein längseinstellbarer Fahrzeugsitz 1 mit einem Sitzteil 3 weist als Längseinsteller auf jeder Seite ein Paar von Sitzschienen auf, bestehend aus einer fahrzeugstrukturfesten Unterschiene 5 als Führungsschiene und einer sitzteilstrukturfesten, in der Unterschiene 5 gleitend geführten Oberschiene 8 als Laufschiene. Die Unterschiene 5 und Oberschiene 8, welche beide im wesentlichen U-förmig ausgebildet sind, hintergreifen einander mit ihren nach innen bzw. außen gebogenen Randbereichen. Die Sitzschienen definieren zugleich die nachfolgenden Richtungsangaben.

Eine Verriegelungsvorrichtung 10 weist drei Rastplatten 12 aus Stahl auf, welche innerhalb eines durch die Oberschiene 8 definierten Bauraums horizontal angeordnet sind und zu jeder Seite jeweils drei Zähne 14 aufweisen, die durch Öffnungen in den Seitenbereichen der Oberschiene 8 greifen. Zum Verriegeln der Oberschiene 8 mit der Unterschiene 5 wirken die Zähne 14 mit U-förmigen, nach unten geöffneten Rasten 15 zusammen, die in den nach innen gebogenen Randbereichen der Unterschiene 5 ausgebildet sind. An jeder Rastplatte 12 ist auf der Oberseite ein Druckstück 16 angeformt oder - aus Stahl oder Kunststoff gefertigt - fest angebracht, welches einen vertikalen Führungsbolzen 18 aus Stahl aufweist. Die Rastplatte 12 ist durch eine Zugfeder 19 nach oben gegen die Oberschiene 8 vorgespannt und mittels des Führungsbolzens 18 in dem oben angeordneten Mittelbereich der Oberschiene 8 geführt. Dieser Mittelbereich definiert zugleich die Oberseite der Oberschiene 8. Jede Rastplatte 12 mit ihren Zähnen 14 und dem Druckstück 16 bildet eine in sich starre erste Baugruppe. Im verriegelten Zustand der Verriegelungsvorrichtung 10 befinden sich die Rastplatten 12 in Eingriff mit der Unterschiene 5, so daß die Sitzschienen relativ zueinander unverschieblich sind.

Auf ihrer nach oben weisenden Seite, um den Führungsbolzen 18 herum, weist das Druckstück 16 eine Gleitkurve 20 auf, welche sich in der durch die Führungsbolzen 18 definierten Bewegungsrichtung des Druckstücks 16 unterschiedlich tief erstreckt. Eine Drehtraverse 22 aus Kunststoff ist teilweise innerhalb und teilweise oberhalb des durch die Oberschiene 8 definierten Bauraumes angeordnet und greift durch Öffnungen im Mittelbereich der Oberschiene 8. Die Drehtraverse 22 ist mittels eines angeformten, in Längsrichtung der Oberschiene 8 verlaufenden, innerhalb des durch die Oberschiene 8 definierten Bauraums angeordneten Lagerwulstes 24 in der Oberschiene 8 in einem oberen Eckbereich gelagert. Auf der gegenüberliegenden Seite zum Lagerwulst 24 weist die Drehtraverse einen angeformten, in Längsrichtung der Oberschiene 8 verlaufenden Steuerwulst 26 auf.

Auf der Drehtraverse 22 ist ein Druckbügel 28 aus Kunststoff fest angebracht, welcher auch einstückig mit der Drehtraverse 22 ausgebildet sein könnte. Die Drehtraverse 22 und der Druckbügel 28 bilden eine in sich starre zweite Baugruppe. Der Druckbügel 28 ist mittels einer Bügelfeder 30 gegenüber der Oberschiene 8 und mittels einer Schenkelfeder 32 gegenüber einer sitzteilfesten Quertraverse nach oben vorgespannt, d.h. der Steuerwulst 26 befindet sich im verriegelten Zustand der Verriegelungsvorrichtung 10 in demjenigen oberen Eckbereich der Oberschiene 8, welcher dem Lagerwulst 24 gegenüber liegt, wobei der Steuerwulst 26 an der Gleitkurve 20 in einem Randabschnitt anliegt. Ein als Entriegelungselement vorgesehener Entriegelungsbügel 34 ist in einem sitzteilfesten Lager gelagert. Der Entriegelungsbügel 34 liegt mit einem kurzen Hebelarm auf dem Druckbügel 28 auf, während er mit einem langen Hebelarm für den Benutzer erreichbar angeordnet ist, beispielsweise im vorderen Bereich des Sitzteils 3.

Zum Entriegeln wird der Entriegelungsbügel 34 manuell nach oben gezogen, wodurch er den Druckbügel 28 so nach unten drückt, daß der Steuerwulst 26 nach unten bewegt wird. Der Steuerwulst 26 gleitet zunächst über einen ansteigenden, steileren Abschnitt der jeweiligen Gleitkurven 20 der Rastplatten 12, die gegebenenfalls unterschiedlich tief eingefallen sind. Durch eine geeignete Wahl der Form der Gleitkurve 20 kann der Kraftanstieg gering gehalten werden. Sobald die jeweilige Rastplatte 12 aus ihren Rasten 15 ausgehoben ist, d.h. von der Unterschiene 5 weg nach unten gedrückt ist, ist der Entriegelungspunkt erreicht. Nach dem Entriegelungspunkt verringert sich die Steigung der Gleitkurve 20 in einem flachen Mittelabschnitt, d.h. die Übersetzung verringert sich, was sich für den Benutzer in einem Abfall der aufzubringenden Entriegelungskraft bemerkbar macht.

### Bezugszeichenliste

- 1: Fahrzeugsitz
- 3: Sitzteil
- 5: Unterschiene, erste Sitzschiene
- 8: Oberschiene, zweite Sitzschiene
- 10: Verriegelungsvorrichtung
- 12: Rastplatte
- 14: Zahn
- 15: Raste
- 16: Druckstück
- 18: Führungsbolzen
- 19: Zugfeder
- 20: Gleitkurve
- 22: Drehtraverse
- 24: Lagerwulst
- 26: Steuerwulst
- 28: Druckbügel
- 30: Bügelfeder
- 32: Schenkelfeder
- 34: Entriegelungsbügel, Entriegelungselement

## Patentansprüche

1. Verriegelungsvorrichtung für einen Fahrzeugsitz, insbesondere für einen Kraftfahrzeugsitz, mit einer ersten Baugruppe (12, 16), die wenigstens ein Riegelelement (14) zum Zusammenwirken mit einer ersten Sitzschiene (5) aufweist und die beweglich und unter Vorspannung an einer zweiten Sitzschiene (8) gelagert ist, einer zweiten Baugruppe (22, 28), die relativ zur ersten Baugruppe (12, 16) beweglich an der zweiten Sitzschiene (8) gelagert ist und bei einer Einwirkung eines manuell betätigbaren Entriegelungselementes (34) auf die erste Baugruppe (12, 16) einwirkt, und je einem Steuerelement (20, 26) der ersten und zweiten Baugruppe (22, 28) zur Steuerung des Entriegelungsvorgangs der ersten Baugruppe (12, 16), wobei die Baugruppen (12, 16, 22, 28) in sich starr sind und die Steuerelemente (20, 26) zwischen der ersten Baugruppe (12, 16) und der zweiten Baugruppe (22, 28) vorgesehen sind, **dadurch gekennzeichnet, dass** die erste Baugruppe (12, 16) als Steuerelement eine Gleitkurve (20) aufweist, welche sich in der Bewegungsrichtung der ersten Baugruppe (12, 16) unterschiedlich tief erstreckt.

2. Verriegelungsvorrichtung nach Anspruch 1, **dadurch gekennzeichnet, dass** die Gleitkurve (20) flachere und steilere Abschnitte aufweist.

3. Verriegelungsvorrichtung nach Anspruch 1 oder 2, **dadurch gekennzeichnet, dass** die zweite Baugruppe (22, 28) schwenkbar an der zweiten Sitzschiene (8) mittels eines Lagers (24) gelagert ist.

4. Verriegelungsvorrichtung nach Anspruch 3, **dadurch gekennzeichnet, dass** das Lager (24) für die zweite Baugruppe (22, 28) innerhalb eines durch die zweite Sitzschiene (8) definierten Bauraums vorgesehen ist.

5. Verriegelungsvorrichtung nach Anspruch 4, **dadurch gekennzeichnet, dass** die zweite Baugruppe (22, 28) als Steuerelement einen Steuerwulst (26) aufweist, welcher gegenüber dem Lager (24) der zweiten Baugruppe (22, 28) beabstandet innerhalb des durch die zweite Sitzschiene (8) definierten Bauraums angeordnet ist.

6. Verriegelungsvorrichtung nach Anspruch 4 oder 5, **dadurch gekennzeichnet, dass** die zweite Baugruppe (22, 28) eine Drehtraverse (22) aufweist, die teilweise innerhalb des durch die zweite Sitzschiene (8) definierten Bauraums und teilweise außerhalb davon angeordnet ist.

7. Verriegelungsvorrichtung nach einem der Ansprüche 1 bis 6, **dadurch gekennzeichnet, dass** die zweite Baugruppe (22, 28) gegenüber der zweiten Sitzschiene (8) vorgespannt ist.

8. Verriegelungsvorrichtung nach einem der Ansprüche 1 bis 7, **dadurch gekennzeichnet, dass** die zweite Baugruppe (22, 28) einstückig oder mehrteilig aus Kunststoff ausgebildet ist.

9. Längseinstellbarer Fahrzeugsitz (1) mit ineinander geführten Sitzschienen (5, 8), **gekennzeichnet durch** eine Verriegelungsvorrichtung (10) nach einem der Ansprüche 1 bis 8.

## Claims

1. Locking device for a vehicle seat, in particular for a motor vehicle seat, having a first subassembly (12, 16) which has at least one bar element (14) for co-operating with a first seat rail (5) and which is supported movably and with pretension on a second seat rail (8), and having a second subassembly (22, 28) which is supported on the second seat rail (8) so as to be movable relative to the first subassembly (12, 16), and acts on the first subassembly (12, 16) when a manually actuatable unlocking element (34) is operated, and having a control element (20, 26) of the first and second subassembly (22, 28) for controlling the unlocking operation of the first subassembly (12, 16), the subassemblies (12, 16, 22, 28) being inherently rigid and the control elements (20, 26) being provided between the first subassembly (12, 16) and the second subassembly (22, 28), **characterised in that** the first subassembly (12, 16) has, as a control element, a sliding cam (20) which extends in the movement direction of the first subassembly (12, 16) to various depths.

2. Locking device according to claim 1, **characterised in that** the sliding cam (20) has flatter and steeper portions.

3. Locking device according to claim 1 or 2, **characterised in that** the second subassembly (22, 28) is supported so as to be pivotable on the second seat rail (8) by means of a bearing (24).

4. Locking device according to claim 3, **characterised in that** the bearing (24) for the second subassembly (22, 28) is provided inside a structural space which is defined by the second seat rail (8).

5. Locking device according to claim 4, **characterised in that** the second subassembly (22, 28) has, as a control element, a control bead (26) which is arranged inside the structural space defined by the second seat rail (8) with spacing relative to the bearing (24) of the second subassembly (22, 28).

6. Locking device according to claim 4 or 5, **characterised in that** the second subassembly (22, 28) has a rotary crossmember (22) which is arranged partially inside the structural space defined by the second seat rail (8) and partially outside it.

7. Locking device according to any one of claims 1 to 6, **characterised in that** the second subassembly (22, 28) is pretensioned relative to the second seat rail (8).

8. Locking device according to any one of claims 1 to 7, **characterised in that** the second subassembly (22, 28) is constructed of plastics material in one piece or several pieces.

9. Longitudinally adjustable vehicle seat (1) having seat rails (5, 8) which are guided one in the other, **characterised by** a locking device (10) according to any one of claims 1 to 8.

## Revendications

1. Dispositif de verrouillage pour un siège de véhicule, en particulier pour un siège de véhicule automobile, comprenant un premier ensemble (12, 16), qui présente au moins un élément de verrouillage (14) en vue de la coopération avec un premier rail de siège (5) et qui est monté mobile et sous prétension sur un deuxième rail de siège (8), un deuxième ensemble (22, 28), qui est monté mobile relativement au premier ensemble (12, 16) sur le deuxième rail de siège (8) et agit sur le premier ensemble (12, 16) lors d'un actionnement d'un élément de déverrouillage (34) manoeuvrable manuellement, et un élément de commande (20, 26) respectivement du premier et du deuxième ensemble (22, 28) pour la commande du processus de déverrouillage du premier ensemble (12, 16), les ensembles (12, 16, 22, 28) étant en soi rigides et les éléments de commande (20, 26) étant disposés entre le premier ensemble (12, 16) et le deuxième ensemble (22, 28), **caractérisé par le fait que** le premier ensemble (12, 16) présente comme élément de commande une came de glissement (20), laquelle s'étend suivant une profondeur différente dans le sens du mouvement du premier ensemble (12, 16).

2. Dispositif de verrouillage selon la revendication 1, **caractérisé par le fait que** la came de glissement (20) présente des sections plus plates et à plus forte pente.

3. Dispositif de verrouillage selon l'une des revendications 1 ou 2, **caractérisé par le fait que** le deuxième ensemble (22, 28) est monté pivotant sur le deuxième rail de siège (8) au moyen d'un appui (24).

4. Dispositif de verrouillage selon la revendication 3, **caractérisé par le fait que** l'appui (24) pour le deuxième ensemble (22, 28) est disposé à l'intérieur d'un espace de construction défini par le deuxième rail de siège (8).

5. Dispositif de verrouillage selon la revendication 4, **caractérisé par le fait que** le deuxième ensemble (22, 28) présente comme élément de commande un bourrelet de commande (26), lequel est disposé vis-à-vis de l'appui (24) du deuxième ensemble (22, 28) à distance à l'intérieur de l'espace de construction défini par le deuxième rail de siège (8).

6. Dispositif de verrouillage selon l'une des revendications 4 ou 5, **caractérisé par le fait que** le deuxième ensemble (22, 28) présente une traverse tournante (22), qui est disposée en partie à l'intérieur de l'espace de construction défini par le deuxième rail de siège (8) et en partie à l'extérieur de celui-ci.

7. Dispositif de verrouillage selon l'une des revendications 1 à 6, **caractérisé par le fait que** le deuxième ensemble (22, 28) est prétendu vis-à-vis du deuxième rail de siège (8).

8. Dispositif de verrouillage selon l'une des revendications 1 à 7, **caractérisé par le fait que** le deuxième ensemble (22, 28) est réalisé d'une seule pièce ou en plusieurs parties en matière plastique.

9. Siège de véhicule (1) réglable en longueur présentant des rails de siège (5, 8) guidés l'un dans l'autre, **caractérisé par** un dispositif de verrouillage (10) tel que défini à l'une des revendications 1 à 8.
